Europäisches Patentamt

European Patent Office

Office européen des brevets

(11) Numéro de publication: **0 112 746**
A1

## (12) DEMANDE DE BREVET EUROPEEN

(21) Numéro de dépôt: **83402273.3**

(22) Date de dépôt: **24.11.83**

(51) Int. Cl.³: **F 16 B 21/18**

(30) Priorité: **25.11.82 FR 8219800**

(43) Date de publication de la demande: **04.07.84**
Bulletin **84/27**

(84) Etats contractants désignés: **AT BE CH DE GB IT LI LU NL SE**

(71) Demandeur: **Moussaian, Grégoire, Résidence Les Plantines, F-78840 Freneuse (FR)**

(72) Inventeur: **Moussaian, Grégoire, Résidence Les Plantines, F-78840 Freneuse (FR)**

(74) Mandataire: **Bressand, Georges et al, c/o CABINET LAVOIX 2 Place d'Estienne d'Orves, F-75441 Paris Cedex 09 (FR)**

(54) **Dispositif de liaison perfectionné à assemblage et démontage rapides.**

(57) Dans ce dispositif de liaison d'assemblage et démontage rapides, du type comprenant un élément femelle constitué par une douille, et un élément mâle, ladite douille 1 comporte un chambrage 2 dans lequel est ménagé un logement 6 pour un organe de retenue élastique 7, l'élément mâle comportant un appendice complémentaire du chambrage 2 de l'élément femelle et dans lequel est ménagé un logement adapté pour recevoir une partie dudit organe de retenue 7.

Dispositif de liaison perfectionné à assemblage
et démontage rapides.-

La présente invention est relative à un dispositif
de liaison à montage et démontage rapide.

Il existe dans de nombreux domaines un nombre considérable d'applications pour lesquelles il est nécessaire d'utiliser un dispositif de liaison entre deux éléments quelconques permettant un assemblage et un démontage rapide de ces éléments, par exemple pour l'assemblage de parties de meubles démontables, la réalisation d'ossatures, d'étagères ou autres, dans le domaine de la robinetterie, des appareils de sport, par exemple pour les planches à voile pour le montage du mât et d'une façon générale dans tous les cas où deux éléments rigides doivent pouvoir être assemblés et séparés instantanément, sans outils, l'assemblage devant présenter une résistance relativement importante en traction.

L'invention a pour but de réaliser un tel dispositif de liaison d'utilisation et de fabrication extrêmement simples et comportant un nombre très réduit de pièces et par conséquent peu coûteux et répondant en outre à tous les besoins énumérés ci-dessus.

L'invention a pour objet à cet effet un dispositif de liaison à assemblage et démontage rapides, du type comportant un élément femelle constitué par une douille et un élément mâle, caractérisé en ce que la douille constituant l'élément femelle comporte un chambrage de section circulaire et un logement adapté pour recevoir un ressort ayant deux branches rectilignes parallèles coupant ledit chambrage suivant deux cordes parallèles, ledit élément mâle ayant en section une forme complémentaire de celle dudit chambrage et présentant dans sa surface externe deux logements opposés adaptés pour coopérer avec lesdites branches du ressort.

D'autres caractéristiques et avantages de l'invention apparaîtront au cours de la description qui va suivre, faite en se référant au dessin annexé donné uni-

2

quement à titre d'exemple et dans lequel :

- la Fig. 1 est une vue en coupe longitudinale de la douille constituant l'élément femelle du dispositif suivant l'invention;

- la Fig. 2 est une vue en coupe suivant la ligne 2-2 de la Fig. 1;

- la Fig. 3 est une vue en coupe suivant la ligne 3-3 de la Fig. 2;

- la Fig. 4 est une vue en coupe longitudinale de l'élément mâle du dispositif suivant l'invention;

- la Fig. 5 est une vue en coupe suivant la ligne 5-5 de la Fig. 4;

- la Fig. 6 montre l'organe de retenue élastique du dispositif suivant l'invention;

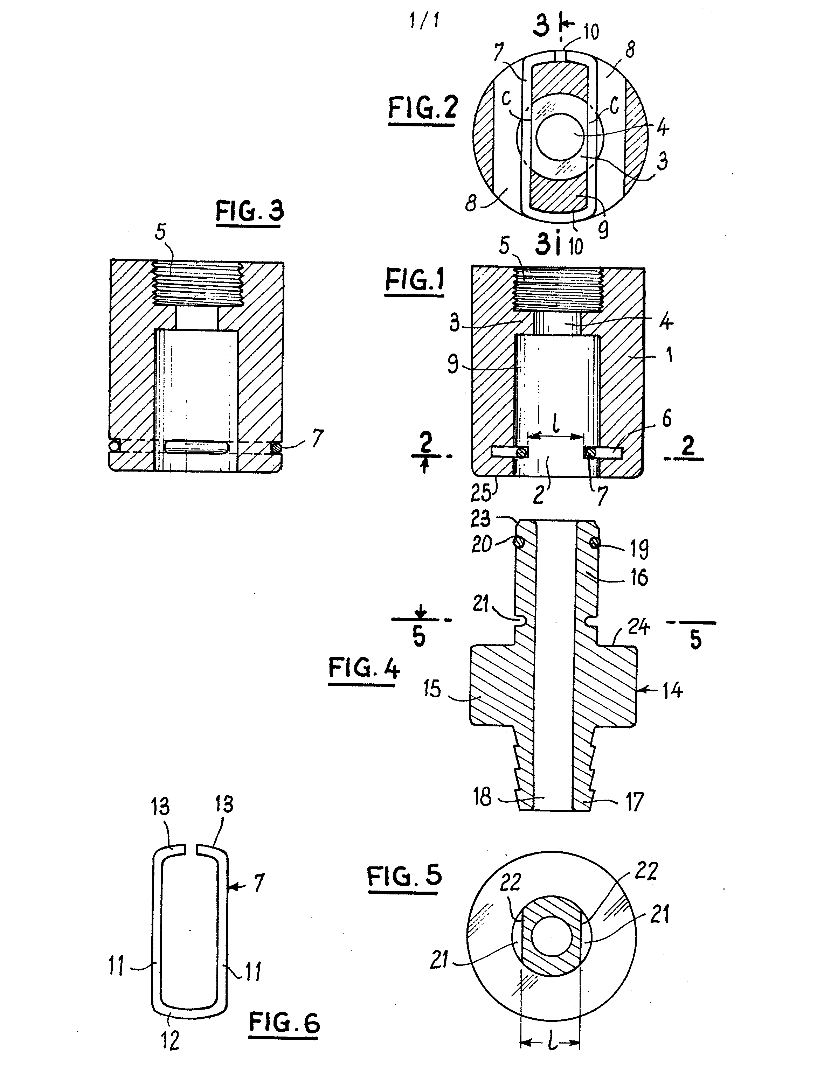

En se référant au dessin, on a représenté à la Fig. 1 une douille constituant l'élément femelle du dispositif de liaison suivant l'invention, qui comprend un corps cylindrique 1 ayant un chambrage 2 ayant en section une forme circulaire et délimité par un rebord radial interne 3 entourant un passage central 4 reliant le chambrage 2 à un chambrage 5 opposé au chambrage 2.

Au voisinage de l'ouverture d'entrée du chambrage 2, un logement 6 est ménagé dans l'épaisseur du corps 1 pour recevoir un organe de retenue élastique 7 (Fig.6).

En se référant à la Fig. 2 qui est une vue en coupe prise dans un plan contenant l'organe de retenue 7, on voit que le logement 6 est constitué par deux passages parallèles formés dans le corps de part et d'autre du chambrage 2 et dont les extrêmités débouchent à l'extérieur du corps. Ces deux passages 8 coupent le chambrage 2 suivant deux cordes parallèles "c" et délimitent entre eux deux parties massives symétriques 9 dont les faces en regard présentent une forme concave délimitée par une partie du chambrage 2 et dont les parois externes 10 sont convexes et situées en retrait par rapport à la surface externe du corps 1 de manière à délimiter

3

deux gorges dans lesquelles sont reçues les extrêmités de l'organe de retenue élastique 7.

Cet organe élastique 7 représenté à la Fig. 6 présente dans son ensemble une forme en "U" ayant deux branches latérales rectilignes parallèles 11 unies par une partie intermédiaire 12 incurvée dont le rayon de courbure est égal au rayon du corps 1, les extrêmités 13 des branches 11 étant repliées vers l'intérieur.

L'organe de retenue élastique 7 est disposé en prise dans le logement 6 du corps 1 en écartant ses extrêmités 13 de façon à faire passer ses branches 11 de part et d'autre des parties massives 9, de façon que la partie intermédiaire 12 et les extrêmités 13 de l'organe de retenue soient logées dans les gorges reliant les rainures 8 à leurs extrêmités (Fig. 2).

On remarquera que les rainures 8 sont prévues suffisamment larges pour permettre le passage des branches 11 en position oblique.

On comprend que grâce à cet agencement, les branches 11 de l'organe de retenue 7 coupent le chambrage 2 suivant deux cordes parallèles désignées par "C", des parties intermédiaires des deux branches 11 étant ainsi découvertes dans le chambrage 2, tandis que les extrêmités 13 repliées des branches retiennent l'organe 7 en place.

On a représenté aux Fig. 4 et 5 l'élément mâle du dispositif suivant l'invention, qui est adapté pour coopérer avec la douille constituant l'élément femelle.

L'élément mâle 14 comprend un corps massif 15 de forme circulaire comportant sur une face un appendice 16 de section circulaire ayant un diamètre égal au diamètre interne du chambrage 2 de l'élément femelle et, sur sa face opposée, un appendice 17, un passage axial 18 s'étendant à travers les appendices 16, 17 et le corps 15. De préférence, le passage 18 présente un dia-

4

mètre interne qui est égal à celui du passage 4 délimité par le rebord annulaire interne 3 de l'élément femelle, lorsque le dispositif est pas exemple destiné à raccorder deux tuyaux conduisant un fluide.

L'appendice 16 comporte au voisinage de son extrémité une gorge 19 dans laquelle est avantageusement logée une garniture d'étanchéité torique 20 en matière élastomère.

L'appendice 16 comporte au voisinage de l'épaulement 24 qu'il délimite avec le corps 15 deux rainures 21 dont les fonds 22 sont parallèles et espacés d'une distance "l" qui est égale à la distance séparant les cordes "C" délimitées dans le chambrage 2 par les branches 11 de l'organe de retenue 7.

On comprend que les fonds 22 des rainures 21 constituent deux méplats dont la hauteur est égale à la largeur des rainures 21, cette largeur étant à peu près égale à la section de l'organe de retenue 7.

Suivant l'exemple représenté, l'appendice 17 comporte une série d'épaulements ayant en section une forme en dents de scie, par exemple adaptés pour recevoir et retenir un élément tubulaire quelconque, par exemple un tuyau ou encore un élément rigide tubulaire tel que par exemple le mât d'une planche à voile (non représenté).

L'appendice 16 comporte enfin sur son bord périphérique d'extrémité un léger chanfrein 23.

On comprend que lorsqu'on introduit l'appendice 16 de l'élément mâle 14 dans le chambrage 2 de l'élément femelle, le chanfrein périphérique 23 entre tout d'abord en contact avec les parties intermédiaires des branches 11 de l'organe de retenue 7 forçant celles-ci à s'écarter élastiquement.

L'élément mâle 14 est introduit dans le chambrage 2 dans une position angulaire quelconque par rapport à

5

l'élément femelle, et lorsque l'épaulement 24 délimité entre l'appendice 16 et le corps 15 entre en contact avec l'extrêmité 25 du corps 1, l'organe élastique de retenue 7 se trouve au niveau des rainures 21.

Si l'on fait alors tourner l'élément mâle dans l'élément femelle dans un sens ou dans l'autre, on parvient dans une position angulaire relative des deux éléments dans laquelle les fonds 22 des deux rainures 21 sont parallèles aux cordes "C" formées par les branches 11 de l'organe de retenue. A ce moment, ces branches se referment élastiquement pour venir se loger dans les rainures 21, retenant ainsi très solidement l'élément mâle dans l'élément femelle en raison du fait que les parties itermédiaires des branches 11 ne peuvent travailler qu'en cisaillement sur une très courte longueur lorsqu'on tente de séparer les deux éléments du dispositif de liaison.

La résistance du dispositif à la traction est donc principalement fonction de la résistance de la matière dans laquelle sont fermés les deux éléments.

Dans la position assemblée du dispositif, les rainures 21 de l'élément mâle coopèrent avec les passages 8 pour compléter un logement dans lequel les branches 11 de l'organe 7 peuvent s'étendre à l'état non contraint en coupant les périphéries du chambrage 2 et de l'appendice 16 suivant des cordes de ceux-ci.

On comprend également que pour séparer les deux éléments il suffit de tourner l'élément mâle par rapport à l'élément femelle dans un sens ou dans l'autre jusqu'à atteindre une position angulaire dans laquelle les extrêmités des fonds 22 des rainures 21 agissant comme des cames écartent les branches 11 de l'organe de retenue jusqu'au moment où les parties convexes de l'appendice 16 situées entre les extrêmités des rainures 21 viennent en contact avec les branches 11 de l'organe de

6

retenue, échappant ainsi complètement à celui-ci.

On comprend enfin que des repères (non représentés) peuvent être portés sur le corps 15 de l'élément mâle et sur le corps 1 de l'élément femelle afin d'indiquer les positions dans lesquelles les deux éléments sont retenus en prise et dans lesquelles ces deux éléments peuvent être séparés.

Le dispositif de liaison suivant l'invention, comprenant au total trois pièces, est d'une fabrication extrêmement simple et donc particulièrement économique et son utilisation est également extrêmement simple tandis que sa résistance à la traction est extrêmement élevée et n'est limitée que par la résistance de la matière au niveau des rainures 21 de l'élément mâle ou encore par la résistance au cisaillement des parties intermédiaires des branches 11 de l'organe de retenue, qui est très élevée même sous une faible section.

## REVENDICATIONS

1. Dispositif de liaison à assemblage et démontage rapides, comprenant un élément femelle constitué d'une douille (1) et une pièce mâle (14), dans lequel la douille (1) présente un chambrage (2) dans lequel est ménagé un logement (6) d'un organe élastique (7) de retenue de la pièce mâle (14), laquelle comprend un appendice (16) complémentaire du chambrage (2) et adapté pour recevoir l'organe de retenue (7), caractérisé en ce que la pièce mâle (14) est pourvue de rainures (21) latérales parallèles, adaptées pour coopérer avec des passages latéraux parallèles (8) ménagés dans l'élément femelle (1) de part et d'autre du chambrage (2) transversalement à celui-ci et constituant le logement (6), l'organe de retenue (7) étant formé d'un ressort en U à deux branches (11) reçues dans les passages (8) dans lesquels elles peuvent s'écarter élastiquement sans déformation lors de l'introduction de l'appendice (16) dans le chambrage (2), en venant s'encliqueter dans les rainures (21) de façon à verrouiller la pièce mâle (14) dans l'élément femelle.

2. Dispositif selon la revendication 1, caractérisé en ce que les branches (11) du ressort (7) ont des extrémités recourbées l'une vers l'autre afin de retenir le ressort (7) sur la pièce mâle (14), ces extrémités étant reçues dans des gorges reliant les passages (8).

3. Dispositif selon la revendication 2, caractérisé en ce que les passages (8) traversent de part en part le corps de la douille (1), et ont une largeur suffisante pour permettre l'introduction dans ceux-ci des branches (11) en position oblique avec leurs extrémités recourbées et pour autoriser ensuite un un écartement suffisant desdites branches (11) lors de l'introduction de la pièce mâle (14) dans la douille (1).

0112746

FIG. 2

FIG. 3

FIG. 1

FIG. 4

FIG. 5

FIG. 6

Office européen
des brevets

# RAPPORT DE RECHERCHE EUROPEENNE

0112746

Numéro de la demande

EP 83 40 2273

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X | DE-C- 815 428 (HENFLER)<br>* figures 8-13 *<br><br>--- | 1-3 | F 16 B 21/18 |
| X | FR-A-2 179 377 (ELTRO)<br>* en entier *<br><br>----- | 1 | |

**DOMAINES TECHNIQUES RECHERCHES (Int. Cl. 3)**

F 16 B

Le présent rapport de recherche a été établi pour toutes les revendications

| Lieu de la recherche<br>LA HAYE | Date d'achèvement de la recherche<br>23-03-1984 | Examinateur<br>VAN DER WAL W |
|---|---|---|